# DEMANDE DE BREVET EUROPEEN

(11) **EP 4 383 280 A1**
(43) Date de publication de la demande: **12.06.2024**
(21) Numéro de dépôt: 22306802.4
(22) Date de dépôt: 07.12.2022
(51) Int. Cl.: H01B 5/00, H01B 5/02, H02G 7/14

(54) **PROCÉDÉ DE RÉDUCTION D'UN BRUIT ÉMIS PAR UN CÂBLE CONDUCTEUR D'ÉLECTRICITÉ, CÂBLE CONDUCTEUR RÉSULTANT**

(71) Demandeur: RTE RESEAU DE TRANSPORT D'ELECTRICITE, 92073 Paris La Défense Cedex (FR)
(72) Inventeur: CAMILLERI, Florent, 92073 Paris La Défense Cedex (FR)
(74) Mandataire: Bonnet, Michel

(57) **Abrégé**

Ce procédé, de réduction d'un bruit émis par un câble (30) conducteur d'électricité comportant des brins conducteurs enroulés en toron et présentant ainsi une couche externe de brins conducteurs enroulés hélicoïdalement, comporte la localisation (100) du bruit émis par le câble conducteur (30), par détermination d'une portion longitudinale (34) de ce câble comportant un défaut émetteur du bruit par effet couronne, et le traitement surfacique (102, 104, 106, 108, 110) de la couche externe de brins conducteurs située dans la portion longitudinale déterminée (34) en vue d'atténuer ou de supprimer le bruit émis. Ce traitement surfacique (102, 104, 106, 108, 110) comporte l'enroulement (108, 110) d'une couche supplémentaire (36) de garniture préformée de réparation à brins conducteurs autour et au contact électromécanique de la couche externe, cet enroulement étant réalisé de telle sorte que la couche supplémentaire (36) soit uniformément répartie autour de la couche externe.

## Description

La présente invention concerne un procédé de réduction d'un bruit émis par un câble conducteur d'électricité. Elle concerne également un câble conducteur d'électricité résultant d'une telle opération de réduction de bruit.

Elle s'applique aux câbles conducteurs permettant le transport et/ou la distribution de courant électrique à haute tension ou très haute tension par voie aérienne, dits « câbles d'énergie », ou aux câbles conducteurs dont la fonction principale n'est pas à proprement parler le transport et/ou la distribution de courant électrique mais plutôt la protection d'un réseau de transport ou de distribution d'électricité contre les effets de la foudre, dits « câbles de garde » ou « câbles de terre ». Ces câbles comportent une pluralité de brins conducteurs enroulés en toron simple et présentant ainsi une couche externe de brins conducteurs enroulés hélicoïdalement selon un sens prédéterminé. A partir de 150 kV, de tels câbles conducteurs peuvent être source de bruit par effet couronne. Il s'agit de décharges partielles dans l'air, qui ionisent l'air et produisent un bruit reconnaissable de bourdonnement et de grésillement. Ce type de bruit est dû à un défaut, généralement présent en surface du câble conducteur, qui crée un effet de pointe.

On distingue les câbles à toron simple, dits câbles spiralés, et les câbles à torons multiples, dits câbles toronnés. Un câble spiralé se compose d'une ou plusieurs couches de brins enroulés en hélice autour d'un brin central. Lorsqu'il comporte plusieurs couches, celles-ci sont alternativement enroulées hélicoïdalement en sens inverses. Les câbles spiralés conviennent par exemple comme éléments de tension et de maintien. Ils conviennent aussi pour le transport et la distribution de courant électrique ou comme câbles de garde : dans ce cas, la couche externe de brins conducteurs est généralement au contact de l'environnement extérieur et le câble est qualifié de « nu ». Un câble toronné se compose d'une ou plusieurs couches de torons qui sont eux-mêmes des câbles spiralés généralement nus. Les torons sont enroulés en hélice autour d'un noyau. Le noyau est également appelé insert ou coeur et peut être constitué d'un noyau en fibre ou en acier. Les câbles toronnés sont essentiellement utilisés pour les charges dynamiques et mécaniques.

Les lignes aériennes de transport et/ou de distribution de courant électrique alternatif à haute tension ou très haute tension sont constituées de câbles conducteurs spiralés nus à brins en aluminium ou alliage d'aluminium montés sur pylônes et maintenus en tension au-delà d'une certaine hauteur minimale pour des raisons de sécurité liées à des gradients de potentiel élevés, notamment supérieurs à 10 kV/cm.

Ces câbles conducteurs nus tendus entre pylônes, ou entre un pylône et une installation de poste électrique de réseau de transport ou de distribution d'électricité, sont soumis à des dégradations telles que des impacts lors d'orages, des agressions externes ou internes telles que des contacts accidentels, des contacts phase/phase ou phase/masse, des impacts de balles de fusils, des dégradations dues aux matériels de lignes tels que des entretoises, des balises, des défauts de conception, des dégradations à l'installation, etc. Chaque dégradation prend alors la forme d'un défaut, sur le câble conducteur, susceptible d'émettre un bruit par effet couronne, notamment lorsque le câble est sous haute tension, par exemple supérieure ou égale à 150 kV.

L'invention porte ainsi plus précisément sur un procédé de réduction d'un bruit émis par un câble conducteur d'électricité, le câble conducteur comportant une pluralité de brins conducteurs enroulés en toron et présentant ainsi une couche externe de brins conducteurs enroulés hélicoïdalement selon un sens prédéterminé, le procédé comportant les étapes suivantes :
- localisation du bruit émis par le câble conducteur par détermination d'une portion longitudinale de ce câble comportant un défaut émetteur du bruit par effet couronne ; et
- traitement surfacique de la couche externe de brins conducteurs située dans la portion longitudinale déterminée en vue d'atténuer ou de supprimer le bruit émis.

Il est en effet important d'essayer d'atténuer voire de supprimer ce type de bruit très caractéristique des lignes à haute et très haute tension pour améliorer le cadre de vie des riverains d'ouvrages électriques susceptibles de subir ces nuisances. Des solutions existent et quelques exemples sont donnés ci-dessous.

Selon un premier procédé de réduction de bruit, il est prévu d'installer un câble conducteur dont la couche externe subit en amont un traitement spécifique de modification de rugosité pour améliorer ses propriétés hydrophiles ou hydrophobes. Cette solution est efficace lors de la construction ou la réhabilitation d'une ligne haute tension. Mais lorsqu'une source de bruit est ponctuellement localisée par détermination d'une portion longitudinale de câble conducteur comportant un défaut émetteur du bruit par effet couronne, il s'avère bien trop coûteux de remplacer le câble conducteur complet par un conducteur à rugosité modifiée.

Selon un deuxième procédé de réduction de bruit, il est possible de poser localement une gaine hydrophile sur la couche externe autour du défaut émetteur de bruit par effet couronne. Mais sa durée de vie est faible à l'échelle de celle du câble et ce type de gaine est généralement de diamètre prédéfini compatible avec peu de câbles. Par ailleurs son installation nécessite un protocole particulier, complexe à mettre en oeuvre par les équipes de maintenance, et engendre des efforts élevés sur les structures lorsqu'elle doit se faire sur l'ensemble d'une portée. Une version relativement simple à mettre en oeuvre de cette solution est toutefois divulguée dans le document de brevet EP 1 626 415 B1, mais elle s'avère d'efficacité limitée et seulement pour réduire l'effet couronne par temps pluvieux. Elle semble en outre nécessiter une longueur de gaine supérieure à 10 mètres, voire même avantageusement de 40 à 400 mètres.

Selon un troisième procédé de réduction de bruit, il est possible d'enrouler un ou deux brins conducteurs autour de la couche externe du câble conducteur. Plusieurs configurations d'enroulements sont par exemple divulguées dans le document de brevet JP 6-9417 (B2), mais elles portent sur des brins ou paires de brins isolés qui visent à casser la fluidité des vents autour du câble conducteur et à réduire le bruit par effet couronne en cas de pluie seulement.

Il peut ainsi être souhaité de prévoir un procédé de réduction d'un bruit émis par un câble conducteur d'électricité qui permette de s'affranchir d'au moins une partie des problèmes et contraintes précités.

Il est donc proposé un procédé de réduction d'un bruit émis par un câble conducteur d'électricité, le câble conducteur comportant une pluralité de brins conducteurs enroulés en toron et présentant ainsi une couche externe de brins conducteurs enroulés hélicoïdalement selon un sens prédéterminé, le procédé comportant les étapes suivantes :
- localisation du bruit émis par le câble conducteur par détermination d'une portion longitudinale de ce câble comportant un défaut émetteur du bruit par effet couronne ; et
- traitement surfacique de la couche externe de brins conducteurs située dans la portion longitudinale déterminée en vue d'atténuer ou de supprimer le bruit émis, ce traitement surfacique comportant plus précisément l'enroulement d'une couche supplémentaire de garniture préformée de réparation à brins conducteurs autour et au contact électromécanique de la couche externe, cet enroulement étant réalisé de telle sorte que la couche supplémentaire soit uniformément répartie autour de la couche externe.

Par « garniture préformée de réparation à brins conducteurs », on entend par exemple :
- une couche de simple garniture de câble, généralement longue de 2 à 2,5 m pour un poids ne dépassant pas 4,2 kg, ou
- une couche de « préformé de réparation », sachant qu'un préformé de réparation est d'aspect identique à une simple garniture de câble, mais à brins plus longs et plus gros pour une même section de câble conducteur.

En procédant ainsi, il a été mesuré une réduction importante du bruit émis par effet couronne, qu'il pleuve ou non, en particulier lorsque le défaut est une rayure en surface externe du câble conducteur ou lorsqu'il résulte d'un dépôt de matière organique. Cette réduction surprenante du bruit émis est certainement due au cumul de deux effets produits par l'enroulement de la couche supplémentaire tel que défini précédemment :
- l'augmentation du diamètre apparent du câble conducteur par ajout de la couche supplémentaire de garniture à brins conducteurs qui produit d'emblée une homogénéisation du champ électrique extérieur et en conséquence une réduction de bruit d'environ quatre à cinq décibels, et
- la couverture locale du défaut par une couche conductrice qui le protège du champ électrique extérieur et donc de l'émission de bruit par effet couronne, cette couverture étant d'autant meilleure que la couche supplémentaire est uniformément répartie autour de la couche externe.

Par ailleurs, il convient de noter que cette solution innovante est particulièrement simple et économique, rapide à mettre en oeuvre par les équipes de maintenance du réseau électrique, pour une amélioration très sensible du cadre de vie des riverains d'ouvrages de lignes électriques à haute et très haute tension.

Enfin, réduire un bruit par effet couronne c'est aussi réduire une perte de puissance électrique, d'où un gain économique et écologique supplémentaire.

De façon optionnelle, l'enroulement de la couche supplémentaire est réalisé dans le même sens hélicoïdal que le sens prédéterminé de telle sorte que chaque interstice entre deux brins voisins de la couche externe soit longitudinalement recouvert par un brin conducteur de la couche supplémentaire de garniture préformée.

De façon optionnelle également, l'enroulement de la couche supplémentaire est réalisé de telle sorte que chaque brin conducteur de la couche supplémentaire de garniture préformée recouvre longitudinalement un interstice entre deux brins voisins de la couche externe.

De façon optionnelle également, l'enroulement de la couche supplémentaire est réalisé de telle sorte que les brins conducteurs de la couche supplémentaire de garniture préformée ne se touchent pas entre eux.

De façon optionnelle également, l'enroulement de la couche supplémentaire de garniture préformée se fait de part et d'autre d'une partie centrale prédéterminée de la portion longitudinale déterminée, notamment de part et d'autre du défaut.

De façon optionnelle également, l'enroulement de la couche supplémentaire est réalisé par l'enroulement successif de plusieurs brins conducteurs individuels préformés.

De façon optionnelle également, l'enroulement de la couche supplémentaire est réalisé par l'enroulement de brins conducteurs formés en au moins une bande de réparation en brins collés préformés.

Il est également proposé un câble conducteur d'électricité comportant :
- une pluralité de brins conducteurs enroulés en toron et présentant ainsi une couche externe de brins conducteurs enroulés hélicoïdalement selon un sens prédéterminé ;
- un défaut, situé dans une portion longitudinale de ce câble, émetteur d'un bruit par effet couronne ; et
- un traitement surfacique de la couche externe de brins conducteurs située dans la portion longitudinale déterminée en vue d'atténuer ou de supprimer le bruit susceptible d'être émis par effet couronne, ce traitement surfacique de la couche externe comportant une couche supplémentaire de garniture préformée de réparation à brins conducteurs enroulés autour et au contact électromécanique de la couche externe, cet enroulement étant réalisé de telle sorte que la couche supplémentaire soit uniformément répartie autour de la couche externe.

De façon optionnelle, les brins conducteurs de la couche supplémentaire de garniture préformée de réparation sont de diamètre supérieur ou égal à celui des brins conducteurs de la couche externe du câble conducteur, notamment de diamètre compris entre 3 et 10 mm.

De façon optionnelle également, le défaut comporte l'un des éléments de l'ensemble constitué :
- d'un état de surface abîmé, notamment rayé, d'au moins l'un des brins conducteurs de la couche externe ;
- d'une goutte de graisse du câble conducteur formée sur sa surface externe ; et
- d'un dépôt de matière organique en surface externe du câble conducteur.

L'invention sera mieux comprise à l'aide de la description qui va suivre, donnée uniquement à titre d'exemple et faite en se référant aux dessins annexés dans lesquels :
- la figure 1 représente schématiquement en perspective un exemple de portion de câble conducteur d'électricité,
- la figure 2 illustre la section spécifique d'un câble conducteur à fibres optiques OPGW (de l'anglais « OPtical Ground Wire ») de type THYM 94,
- la figure 3 représente schématiquement en vue longitudinale une portion de câble conducteur d'électricité comportant au moins un défaut émetteur de bruit par effet couronne,
- la figure 4 illustre une section, par exemple du câble conducteur de la figure 3, avec plusieurs types de défauts susceptibles d'engendrer un bruit par effet couronne,
- la figure 5 représente schématiquement en vue longitudinale la portion de câble conducteur d'électricité de la figure 3 selon un mode de réalisation de l'invention, c'est-à-dire après intervention en réduction de bruit,
- la figure 6 illustre la section de câble de la figure 4 après intervention en réduction de bruit, et
- la figure 7 illustre les étapes successives d'un procédé de réduction d'un bruit émis par un câble conducteur d'électricité tel que celui de la figure 3, selon un mode de réalisation de l'invention, pour l'obtention d'un câble réparé tel que le câble dont une portion est illustrée sur la figure 5.

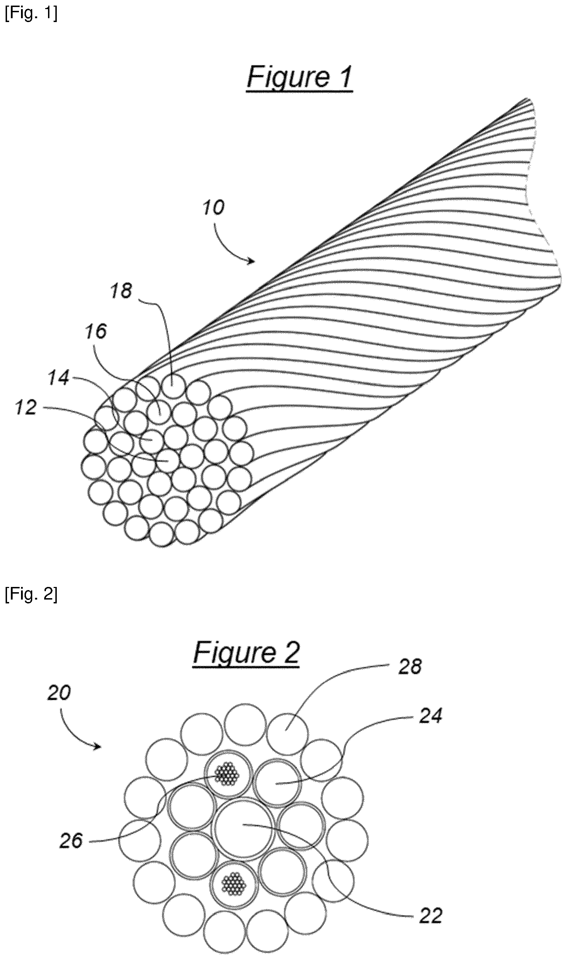

La portion de câble illustrée sur la figure 1 est constituée d'un conducteur nu 10 comportant lui-même plusieurs brins conducteurs disposés en toron et en couches concentriques de sens hélicoïdaux alternés, ces brins étant à sections de formes prédéterminées telles que des sections circulaires, trapézoïdales ou en « Z ». Cette structure, conforme aux normes européennes EN 50182, EN 50540 et EN 62219 est celle généralement retenue pour les câbles conducteurs de courant électrique à haute tension HTB qui présentent un diamètre de quelques centimètres. A titre d'exemple, un conducteur nu référencé 570-AL4 selon cette norme présente 61 brins en almelec (alliage d'aluminium, de magnésium et de silicium) de sections circulaires 3,45 mm disposés en quatre couches autour d'un brin central pour un diamètre total de 31,05 mm avec une tolérance de 1 %. A titre d'exemple également, correspondant par ailleurs à l'illustration de la figure 1, un conducteur nu référencé 288-AL4 selon cette norme présente 37 brins en almelec de sections circulaires 2,80 mm disposés en trois couches autour d'un brin central pour un diamètre total de 19,6 mm avec une tolérance de 1 %. D'autres configurations et matériaux à base d'aluminium, d'aluminium recuit ou d'alliage d'aluminium (par exemple en almelec ou en alliage d'aluminium et de zirconium) sont encore possibles selon les normes EN 50182, EN 50540 et EN 62219.

Plus précisément, le conducteur nu 10 référencé 288-AL4 comporte :
- un brin central 12 formant l'axe longitudinal du câble,
- une première couche de six brins 14 disposés hélicoïdalement autour du brin central 12,
- une deuxième couche de douze brins 16 disposés hélicoïdalement autour de la première couche en sens inverse, et
- une troisième couche de dix-huit brins 18 disposés hélicoïdalement autour de la deuxième couche en sens inverse.

Le tout forme un câble conducteur spiralé, c'est-à-dire à toron simple.

Les brins 12, 14, 16 et 18 sont enserrés de telle sorte que seule une portion de surface de chaque brin 18 appartenant à la troisième et dernière couche est en contact avec le milieu atmosphérique pour former la surface spécifique externe du conducteur nu 10. Le reste des brins 12, 14, 16 et 18 forme un volume intérieur du câble, destiné à conduire un courant électrique.

Il convient en outre de noter que le conducteur nu 10 n'est pas anodisé. Cela signifie qu'il n'a pas subi de traitement de sa surface spécifique externe visant à la couvrir d'une couche supplémentaire protectrice et isolante par oxydation anodique.

Conformément à l'illustration spécifique de la figure 2, un câble conducteur peut aussi comporter des brins tubulaires de fibres optiques.

Ainsi, le câble conducteur nu 20 de type THYM 94 dont une section est représentée sur cette figure comporte :
- un brin central 22 formant l'axe longitudinal du câble, de diamètre maximal et en acier galvanisé,
- une première couche interne de sept brins enroulés hélicoïdalement autour du brin central 22, dont cinq brins conducteurs 24 en acier galvanisé et deux brins tubulaires 26 en tube d'acier comportant vingt-quatre fibres optiques chacun, ces brins 24 et brins tubulaires 26 étant de diamètre inférieur au diamètre maximal du brin central 22, et
- une deuxième couche externe de quinze brins 28 en alliage d'aluminium enroulés hélicoïdalement autour de la première couche en sens inverse.

Le tout forme également un câble conducteur spiralé, c'est-à-dire à toron simple.

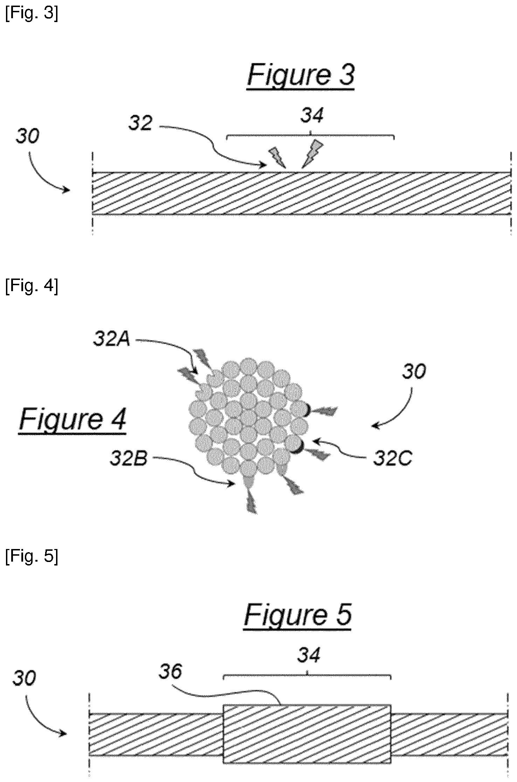

Une portion de câble conducteur spiralé 30, pouvant par exemple correspondre à l'un quelconque des deux câbles précédemment détaillés, est représentée schématiquement en vue longitudinale sur la figure 3. On y voit qu'au moins un défaut 32, situé dans une portion longitudinale 34 de ce câble 30, est source de bruit par effet couronne.

Différents types de défauts sont susceptibles d'engendrer un bruit par effet couronne lorsque le câble conducteur 30 conduit effectivement du courant électrique à haute ou très haute tension. Ces différents types de défauts sont illustrés sur la section de câble conducteur 30 illustrée dans la figure 4. Un premier type de défaut 32A est un état de surface abîmé, notamment rayé, d'au moins l'un des brins conducteurs de la couche externe du câble conducteur 30. Un deuxième type de défaut 32B est une goutte de graisse du câble conducteur 30 formée sur sa surface externe. Un troisième type de défaut 32C est un dépôt de matière organique en surface externe du câble conducteur 30. Ce sont les types de défauts les plus courants sur une ligne à haute tension, mais d'autres types de défauts sont également susceptibles d'engendrer un bruit par effet couronne.

Un tel câble conducteur 30 porteur d'au moins un défaut peut nécessiter une intervention en réduction de bruit, notamment lorsque ce bruit dérange les riverains. Le résultat d'une telle intervention, lorsqu'elle est réalisée conformément aux principes généraux de la présente invention, est illustré par la figure 5. Pour qu'une telle intervention soit possible lorsqu'il s'agit d'un câble conducteur à brins tubulaires de fibres optiques, il est optionnellement avantageux que chaque brin tubulaire à fibre(s) optique(s) soit séparé de la surface externe du câble conducteur par au moins un enroulement de brins conducteurs comportant le ou les défaut(s) générateur(s) de bruit par effet couronne.

Dans la figure 5, la portion longitudinale 34 dans laquelle le câble conducteur 30 comporte au moins un défaut émetteur de bruit par effet couronne est recouverte d'une couche supplémentaire 36 de garniture préformée de réparation à brins conducteurs. Cette dernière est enroulée autour et au contact électromécanique de la couche externe du câble conducteur 30 dans la portion longitudinale 34. De plus, son enroulement est spécifiquement réalisé de telle sorte que la couche supplémentaire 36 soit uniformément répartie autour de la couche externe pour une couverture optimale des défauts précités.

Cette couche supplémentaire 36 de garniture préformée est par exemple constituée d'un enroulement de brins conducteurs en aluminium ou alliage d'aluminium, par exemple l'alliage d'aluminium 6101.

De façon optionnelle mais avantageuse, l'enroulement de la couche supplémentaire 36 est réalisé dans le même sens hélicoïdal que le sens prédéterminé de la couche externe du câble 30 de telle sorte que chaque interstice entre deux brins voisins de la couche externe soit longitudinalement recouvert par un brin conducteur de la couche supplémentaire 36 de garniture préformée. Ainsi la couverture des défauts précités est encore plus efficace. On notera que ce sens d'enroulement est contre-intuitif dans le domaine technique considéré puisqu'il est d'usage de toujours alterner les sens d'enroulement d'une couche de brins à l'autre.

Réciproquement, l'enroulement de la couche supplémentaire 36 peut être réalisé de telle sorte que chacun de ses brins conducteurs recouvre longitudinalement un interstice entre deux brins voisins de la couche externe. Il y a alors une coopération optimale des brins de la couche supplémentaire 36 de garniture préformée avec ceux de la couche externe du câble 30.

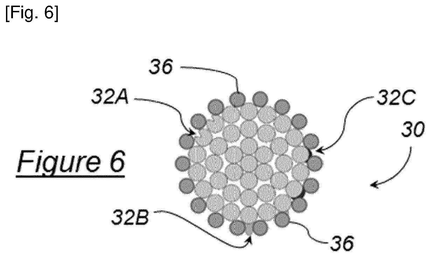

La figure 6 illustre la section de câble 30 de la figure 4 après intervention en réduction de bruit conformément aux principes généraux de la présente invention. On y constate que tous les types de défauts 32A, 32B et 32C précités sont efficacement recouverts par la couche supplémentaire 36 de garniture préformée, d'autant plus que celle-ci est uniformément répartie autour de la couche externe du câble 30. En particulier, le fait que tous les interstices entre brins voisins de la couche externe soient recouverts par un brin de la couche supplémentaire 36 améliore l'escamotage des défauts.

Comme spécifiquement illustré par la figure 6, l'enroulement de la couche supplémentaire 36 peut être réalisé de telle sorte que les brins conducteurs de la couche supplémentaire 36 de garniture préformée ne se touchent pas entre eux. C'est notamment le cas lorsque les brins conducteurs de la couche supplémentaire 36 de garniture préformée sont de diamètre inférieur à celui des brins conducteurs de la couche externe du câble conducteur 30.

En variante, les brins conducteurs de la couche supplémentaire 36 de garniture préformée peuvent être de diamètre supérieur ou égal à celui des brins conducteurs de la couche externe du câble conducteur 30, notamment de diamètre compris entre 3 et 10 mm, au point qu'ils puissent se toucher entre eux.

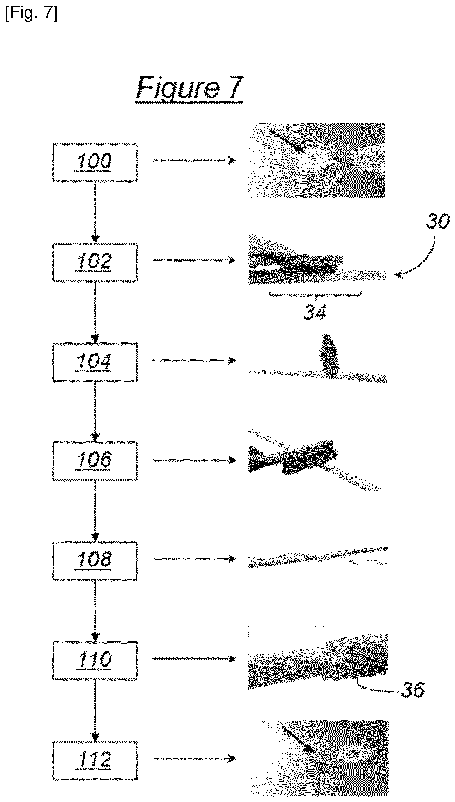

Un procédé de réduction d'un bruit émis par un câble conducteur d'électricité, conformément à un mode de réalisation préféré de la présente invention, va maintenant être détaillé en référence à la figure 7.

Au cours d'une première étape 100 de localisation, alors que le câble conducteur 30 est par exemple monté et tendu entre deux pylônes, ou entre un pylône et une installation de poste électrique de réseau de transport ou de distribution d'électricité, une zone sur laquelle intervenir en réduction de bruit est repérée. Elle peut avoir été signalée en amont par un riverain ou par une équipe opérationnelle du gestionnaire du réseau électrique. Il s'agit de déterminer une portion longitudinale 34 de ce câble conducteur 30, comportant un défaut émetteur de bruit par effet couronne. Cela revient à localiser la source du bruit émis par le câble. Pour cela, une caméra à ultrason ou ultraviolet peut être utilisée de façon connue en soi. La localisation peut alors être notée précisément, par exemple en notant ses coordonnées GPS ou en marquant un repère au sol à l'aplomb du défaut localisé. On notera qu'une caméra à ultrason permet en outre d'indiquer un signal en décibel associé à chaque source de bruit, ainsi que la capacité de la décharge partielle.

Au cours d'une étape 102 suivante, la surface externe du câble conducteur 30 peut être nettoyée si nécessaire à l'aide d'une brosse métallique de part et d'autre du défaut localisé, c'est-à-dire par exemple sur toute la surface externe de la portion longitudinale 34. A la fin de cette étape, on repère un point central d'enroulement de la couche supplémentaire 36 de garniture préformée à l'aide d'une marque à peu près centrée sur le défaut localisé. A partir de cette marque, deux repères supplémentaires équidistants et distants entre eux de la longueur de la couche supplémentaire 36 peuvent être marqués.

Au cours d'une étape 104 suivante et si nécessaire, le câble conducteur 30 est enduit de graisse conductrice au moins sur la portion longitudinale 34, par exemple sur toute la longueur repérée par les repères supplémentaires précités. Il est possible d'utiliser une graisse conductrice de type pâte de contact telle que la pâte NETOXAL G (marque déposée). Il convient avantageusement de laisser la marque précitée bien visible. Avantageusement également, la graisse conductrice présente en outre des propriétés mécaniques de grippage pour s'opposer à tout glissement des surfaces entre lesquelles elle s'interpose, ce qui est le cas de la pâte NETOXAL G.

Au cours d'une étape 106 suivante, le câble conducteur 30 enduit de graisse conductrice et grippante entre les repères supplémentaires précités, ou au moins sur la portion longitudinale 34, est nettoyé à l'aide de la brosse métallique pour enlever d'éventuels résidus d'alumine.

Au cours d'étapes 108 et 110 suivantes, la couche supplémentaire 36 de garniture préformée est enroulée autour et au contact électromécanique de la portion longitudinale 34, par exemple par enroulements successifs de plusieurs bandes de réparation en brins collés préformés. Dans ce cas, chaque bande de réparation est marquée d'un repère en son centre qu'il convient de faire coïncider avec la marque précitée pour qu'elle puisse couvrir le câble conducteur 30 sur toute la longueur entre les repères supplémentaires précités. Une première bande de réparation est enroulée à l'étape 108 dans un sens hélicoïdal d'enroulement, par exemple celui de la couche externe du câble conducteur 30, de part et d'autre de la marque précitée. L'opération est répétée avec autant de bandes de réparation que nécessaire pour parvenir à un recouvrement complet et uniforme du câble conducteur 30 entre les repères supplémentaires précités à l'issue de l'étape 110. En variante, les brins de la couche supplémentaire 36 de garniture préformée peuvent être enroulés individuellement les uns après les autres.

Enfin, au cours d'une dernière étape 112, une vérification de la réduction ou de la disparition du bruit par effet couronne peut être réalisée à l'aide de la caméra à ultrason ou ultraviolet mentionnée précédemment. Les illustrations associées aux étapes 100 et 112 de la figure 7 résultent d'une expérimentation réellement menée. La flèche noire y indique une disparition complète du bruit.

On notera que toutes les étapes précitées peuvent être réalisées en travaux sous tension, selon les normes de sécurité en vigueur. En variante, les étapes 102 à 110 peuvent être réalisées après une mise hors tension de la ligne concernée.

L'opération pourra être répétée avec autant de garniture préformée que nécessaire pour parvenir à un recouvrement complet de la portion de câble conducteur émettrice de bruit, en particulier lorsqu'elle n'est pas ponctuelle mais répartie sur une certaine longueur.

En parallèle, il peut aussi être réalisé une mesure de bruit par acousticien, afin de quantifier la diminution de bruit de l'ensemble de la ligne concernée grâce à l'intervention. Cette mesure se réalise en deux ou trois étapes :
- avant l'intervention : quantifier le bruit ambiant (ouvrage électrique + bruit environnemental) avant l'installation d'une couche supplémentaire de garniture préformée de réparation contre le bruit ;
- pendant l'intervention si celle-ci se fait hors tension : quantifier le bruit environnemental seul ;
- après l'intervention, et remise sous tension le cas échéant : quantifier le bruit ambiant après l'installation de la couche supplémentaire de garniture préformée de réparation contre le bruit.

Il est ainsi possible de comparer le bruit ambiant avant et après la pose de la couche supplémentaire de garniture. Si l'intervention a été réalisée avec consignation de la ligne concernée, c'est-à-dire avec une mise hors tension, on peut aussi calculer les émergences dues à la ligne concernée, avant et après l'intervention. Si le bruit après intervention est significativement inférieur au bruit avant intervention, cela signifie que la solution appliquée a fonctionné.

Il apparaît clairement qu'un procédé de réduction d'un bruit émis par un câble conducteur d'électricité tel que celui décrit précédemment permet une intervention très simple et à moindres frais. Comme noté précédemment, cette intervention peut tout à fait être réalisée sous tension, sans aucun impact pour les usagers. Par ailleurs, une garniture préformée de réparation présente une durée de vie tout à fait comparable à celle d'un câble conducteur de ligne à haute ou très haute tension, ce qui est très avantageux.

On notera par ailleurs que l'invention n'est pas limitée au mode de réalisation décrit précédemment.

En particulier, rien n'empêche d'opérer un travail de surface sur la couche supplémentaire de garniture préformée de réparation pour la rendre, de façon connue en soi, hydrophile, hydrophobe ou antisalissure. La garniture pourrait aussi être composée d'un autre matériau conducteur que ceux généralement employés en réparation (aluminium et alliages d'aluminium), par exemple plus résistant aux conditions rudes qu'il doit subir : le cuivre est un bon exemple.

Il apparaîtra plus généralement à l'homme de l'art que diverses modifications peuvent être apportées au mode de réalisation décrit ci-dessus, à la lumière de l'enseignement qui vient de lui être divulgué. Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Procédé de réduction d'un bruit émis par un câble (30) conducteur d'électricité, le câble conducteur (30) comportant une pluralité de brins conducteurs enroulés en toron et présentant ainsi une couche externe de brins conducteurs enroulés hélicoïdalement selon un sens prédéterminé, le procédé comportant les étapes suivantes :
- Localisation (100) du bruit émis par le câble conducteur (30) par détermination d'une portion longitudinale (34) de ce câble comportant un défaut (32) émetteur du bruit par effet couronne ; et
- traitement surfacique (102, 104, 106, 108, 110) de la couche externe de brins conducteurs située dans la portion longitudinale déterminée (34) en vue d'atténuer ou de supprimer le bruit émis ;
**caractérisé en ce que** le traitement surfacique (102, 104, 106, 108, 110) de la couche externe comporte l'enroulement (108, 110) d'une couche supplémentaire (36) de garniture préformée de réparation à brins conducteurs autour et au contact électromécanique de la couche externe, cet enroulement étant réalisé de telle sorte que la couche supplémentaire (36) soit uniformément répartie autour de la couche externe.

2. Procédé de réduction d'un bruit émis par un câble (30) conducteur d'électricité selon la revendication 1, dans lequel l'enroulement (108, 110) de la couche supplémentaire (36) est réalisé dans le même sens hélicoïdal que le sens prédéterminé de telle sorte que chaque interstice entre deux brins voisins de la couche externe soit longitudinalement recouvert par un brin conducteur de la couche supplémentaire (36) de garniture préformée.

3. Procédé de réduction d'un bruit émis par un câble (30) conducteur d'électricité selon la revendication 1 ou 2, dans lequel l'enroulement (108, 110) de la couche supplémentaire (36) est réalisé de telle sorte que chaque brin conducteur de la couche supplémentaire (36) de garniture préformée recouvre longitudinalement un interstice entre deux brins voisins de la couche externe.

4. Procédé de réduction d'un bruit émis par un câble (30) conducteur d'électricité selon l'une quelconque des revendications 1 à 3, dans lequel l'enroulement (108, 110) de la couche supplémentaire (36) est réalisé de telle sorte que les brins conducteurs de la couche supplémentaire (36) de garniture préformée ne se touchent pas entre eux.

5. Procédé de réduction d'un bruit émis par un câble conducteur (30) d'électricité selon l'une quelconque des revendications 1 à 4, dans lequel l'enroulement (108, 110) de la couche supplémentaire (36) de garniture préformée se fait de part et d'autre d'une partie centrale prédéterminée de la portion longitudinale déterminée (34), notamment de part et d'autre du défaut (32).

6. Procédé de réduction d'un bruit émis par un câble (30) conducteur d'électricité selon l'une quelconque des revendications 1 à 5, dans lequel l'enroulement (108, 110) de la couche supplémentaire (36) est réalisé par l'enroulement successif de plusieurs brins conducteurs individuels préformés.

7. Procédé de réduction d'un bruit émis par un câble (30) conducteur d'électricité selon l'une quelconque des revendications 1 à 5, dans lequel l'enroulement (108, 110) de la couche supplémentaire (36) est réalisé par l'enroulement de brins conducteurs formés en au moins une bande de réparation en brins collés préformés.

8. Câble (30) conducteur d'électricité comportant :
- une pluralité de brins conducteurs enroulés en toron et présentant ainsi une couche externe de brins conducteurs enroulés hélicoïdalement selon un sens prédéterminé ;
- un défaut (32), situé dans une portion longitudinale (34) de ce câble (30), émetteur d'un bruit par effet couronne ; et
- un traitement surfacique de la couche externe de brins conducteurs située dans la portion longitudinale déterminée (34) en vue d'atténuer ou de supprimer le bruit susceptible d'être émis par effet couronne ;
**caractérisé en ce que** le traitement surfacique de la couche externe comporte une couche supplémentaire (36) de garniture préformée de réparation à brins conducteurs enroulés autour et au contact électromécanique de la couche externe, cet enroulement étant réalisé de telle sorte que la couche supplémentaire (36) soit uniformément répartie autour de la couche externe.

9. Câble (30) conducteur d'électricité selon la revendication 8, dans lequel les brins conducteurs de la couche supplémentaire (36) de garniture préformée de réparation sont de diamètre supérieur ou égal à celui des brins conducteurs de la couche externe du câble conducteur, notamment de diamètre compris entre 3 et 10 mm.

10. Câble (30) conducteur d'électricité selon la revendication 8 ou 9, dans lequel le défaut (32) comporte l'un des éléments de l'ensemble constitué :
- d'un état de surface abîmé (32A), notamment rayé, d'au moins l'un des brins conducteurs de la couche externe ;
- d'une goutte de graisse (32B) du câble conducteur (30) formée sur sa surface externe ; et
- d'un dépôt de matière organique (32C) en surface externe du câble conducteur (30).
